# EUROPEAN PATENT SPECIFICATION

(11) **EP 1 257 593 B1**
(45) Date of publication and mention of the grant of the patent: **06.07.2005**
(21) Application number: 00986272.3
(22) Date of filing: 07.12.2000
(51) Int. Cl.: C08G 69/48, D01F 6/60

(54) **POLYAMIDE CHAIN EXTENSION PROCESS AND FUNCTIONALIZED POLYAMIDES PRODUCED THEREBY**
POLYAMID KETTENVERLÄNGERUNGS-VERFAHREN UND DADURCH HERGESTELLTE FUNKTIONALISIERTE POLYAMIDE
PROCEDE D'EXTENSION DE CHAINE POLYAMIDIQUE ET POLYAMIDES FONCTIONNALISES PRODUITS DE LA SORTE

(30) Priority: 20.01.2000 US 176922 P
(43) Date of publication of application: 20.11.2002
(73) Proprietor: INVISTA Technologies S.à.r.l., Wilmington, DE 19808 (US)
(72) Inventor: ZAHR, George, E., Glen Mills, PA 19342 (US)
(74) Representative: Carpmaels & Ransford
(86) International application number: PCT/US2000/033059
(87) International publication number: WO 2001/053383

(56) References cited:
- EP-A- 0 288 253
- WO-A-96/34909
- WO-A-98/47940
- PATENT ABSTRACTS OF JAPAN vol. 013, no. 494 (C-651), 8 November 1989 (1989-11-08) & JP 01 197526 A (TEIJIN LTD), 9 August 1989 (1989-08-09)
- PATENT ABSTRACTS OF JAPAN vol. 010, no. 377 (C-392), 16 December 1986 (1986-12-16) & JP 61 171732 A (UNITIKA LTD), 2 August 1986 (1986-08-02)

## Description

### BACKGROUND OF THE INVENTION

### 1. Field of the Invention.

This invention relates to a process for incorporating functionality in polyamides by incorporating a functional chemical group into the backbone of a reactant polyamide and to related polyamide products incorporating functional chemical groups in their polyamide chains.

### 2. Description of Related Art.

Various methods have been proposed to incorporate a functional chemical group into the backbone of polyamides by having the functional chemical group as part of a co-monomer molecule used to prepare the polyamide. For example, 5-sulfoisophthalic acid is added as a co-monomer to adipic acid and hexamethylenediamine to produce a polyamide polymer with reduced acid stain receptivity functionality as described in U.S. Patent 3,846,507. Incorporation of functional groups in this manner limits the addition of functional chemical groups to the polymerization step.

One method for incorporating groups into polyamides is referred to as chain extension. Chain extension is based on a reaction between a polyamide chain end (an acid or an amine) and a chain extender molecule with two reactive ends that react with either the amine or the acid end of the polyamide to connect two polyamide chains.

The use of bis-lactams for polyamidation acceleration is disclosed by Flory in U.S. Patent 2,682,526.

There is a need to provide convenient methods for incorporating functionality into polyamides. There is also a need to take polyamides with low relative viscosity (RV) and increase their RV to a predictable final product with a higher RV, while at the same time introducing functionality into the final product.

These and other needs of the invention have been satisfied by the present invention.

The invention provides a process for incorporating functional chemical groups into the backbone of polyamides comprising:
contacting a reactant polyamide and (i) a chain extender compound selected from the group consisting of bis-N-acyl bislactam compounds and mixtures thereof and a functional diamine or triamine compound or (ii) a functional chain extender selected from the group consisting of functionalized bis-N-acyl bislactam compounds and a functional diamine or triamine compound, in a liquid phase,
the reactant polyamide having a starting RV, a concentration of amine end groups (AEG(R)), and a concentration of carboxyl end groups (CEG(R)),
the functional diamine or triamine having a concentration of amine end groups AEG(F),
the chain extender compound or functional chain extender having a concentration of lactam end groups (LEG) of at least about 10 equivalents per million grams of the reactant polyamide less than the sum of AEG(R) and AEG(F), for a duration of about 0.5 minutes to about 10 minutes, increasing the RV of the reactant polyamide.

In one embodiment, the product has a concentration of amine end groups (AEG(P)) as defined by the formula:

AEG(P) = {AEG(R) + AEG(F)- LEG} ± X (1)

wherein:
- AEG(P): is the concentration of amine end groups in the quenched product in units of equivalents/1,000,000 gms of the product;
- AEG(R): is the concentration of amine end groups in the reactant polyamide in units of equivalents/1,000,000 gms of the reactant polyamide;
- AEG(F): is the concentration of amine end groups in the functional diamine or triamine compound in units of equivalents/1,000,000 gms of the reactant polyamide;
- LEG: is the concentration of lactam end groups in the chain extender compound or functional chain extender in units of equivalents/1,000,000 gms of the reactant polyamide; and
- X: is any number in a range of about 0 to about 15.

The invention is further directed to a product made by the process of the present invention. An exemplary product is a filament, comprising:
a synthetic melt spun polymer induding:
   polyamide repeating units or functional diamine or triamine units(R₁);
   polyamide chain extender moieties (R₂), each independently, selected from the group consisting of optionally functionalized bis-N-acyl bislactam moieties; and
   terminal groups (R₃), each independently, selected from the group consisting of a hydrogen atom and a hydroxyl group; wherein at least one of functional diamine, functional triamine, or functional N-acyl bislactam is present;
the polymer including chains, each independently, having a chemical structure:

   R₃-(R₁-R₂)_{y}-R₁-R₃ (2)

   wherein y is an integer of 1-14; and
the filament has a formic acid relative viscosity of at least about 30.

Further objects, features, and advantages of the invention will become apparent from the detailed description that follows.

### BRIEF DESCRIPTION OF THE DRAWINGS

The invention can be more fully understood from the following detailed description thereof in connection with accompanying drawings described as follows.
Figure 1 is a schematic illustration of a system that can be used for producing a polyamide filament in accordance with the present invention.
Figure 2 is graph showing a schematic representation of relative viscosity versus time for a reaction to produce nylon 6,6 utilizing a chain extender compound.

Throughout the following detailed description, similar reference characters refer to similar elements in all figures of the drawings.

### I. Process

The invention is directed to a process for incorporating a functional chemical group into the backbone of a reactant polyamide, including the steps of contacting the reactant polyamide with a functional diamine or triamine compound and a chain extender compound, or contacting the reactant polyamide with a functional chain extender compound with the functional diamine or triamine, forming a functionalized, chain extended product.

### A. Contacting Step

The first step of the process is contacting the reactant polyamide with a functional diamine or triamine compound and a chain extender compound, or contacting the reactant polyamide with a functional chain extender compound with a functional diamine or triamine compound, all in a liquid phase.

The contacting step extends for a reaction time period between a time of first contact of the reactant polyamide with a functional diamine or triamine compound and a chain extender compound, or contacting the reactant polyamide with a functional chain extender compound with a functional diamine or triamine compound, all in the liquid state, and a time that the formed product is quenched. This reaction time period generally extends for a duration of about 0.5 minutes to about 10 minutes. The duration of the reaction time generally does not effect the incorporation of the functionality in the backbone of the chain but affects the final RV of the product.

The contacting step can be performed at desired temperatures and pressures. The contacting step can be performed at a temperature of about 5°C to about 20°C above the melting point of the polymer. For example, for nylon 6,6, the temperature can be about 270°C to about 285°C. The contacting step can be performed at a pressure of about 0.25 psig to about 250 psig depending on the process and polymer used. Preferably, the contacting step is performed while mixing the reactants.

### 1. Reactant Polyamide

Reactant polyamides suitable for use in this invention includes synthetic melt spinnable polyamide materials having recurring amide groups (―CO―NH―) as an integral part of the polymer chain. The term polyamide is used in this application to refer to polyamide homopolymers, copolymers, and mixtures thereof. Suitable polyamides that can be used in accordance with the invention include poly(hexamethylene adipamide) (i.e., nylon 6,6) homopolymer, poly(e-caproamide) (i.e., nylon 6) homopolymer, polydodecanolactam (i.e., nylon 12) homopolymer, poly(tetramethyleneadipamide) (i.e., nylon 4,6) homopolymer, poly(hexamethylene sebacamide) (i.e., nylon 6,10) homopolymer, the polyamide of n-dodecanedioic acid and hexamethylenediamine (i.e., nylon 6,12) homopolymer, the polyamide of dodecamethylenediamine and n-dodecanedioic acid (i.e., nylon 12,12) homopolymer, copolymers thereof, and mixtures thereof.

Illustrative polyamides and copolyamides which can be employed in the process of this invention are those described in U.S. Patents 5,077,124, 5,106,946, and 5,139,729 (each to Cofer et al., and each incorporated herein by reference in their entirety). Illustrative polyamide mixtures which can be employed in the process of this invention are those disclosed by Gutmann in Chemical Fibers International, pages 418-420, Volume 46, December 1996, incorporated by reference herein.

Illustrative polyamides also include copolymers made from a dicarboxylic acid component, such as terephthalic acid, isophthalic acid, adipic acid, or sebacic acid, and a diamine component, such as hexamethylenediamine, 2-methylpentamethylenediamine, or 1,4-bis(aminomethyl)cyclohexane.

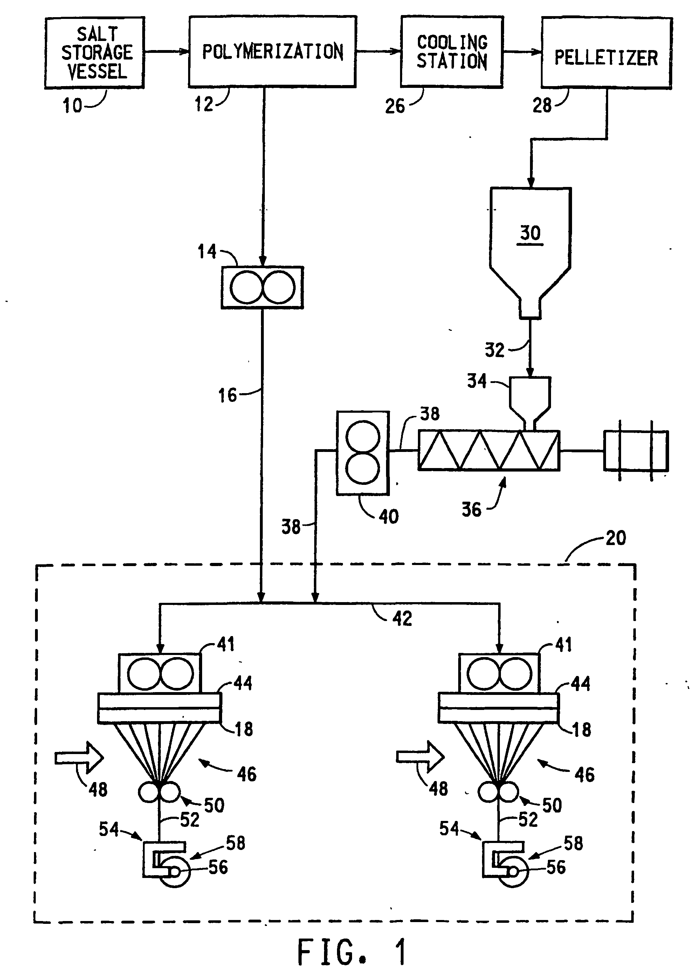

The reactant polyamides can be prepared using batch or continuous polymerization methods known in the art. As illustrated in Figure 1, a suitable method of preparing polyamides is to store a polyamide salt mixture/solution in a salt storage vessel 10. The salt mixture/solution is fed from the storage vessel 10 to a polymerizer 12, such as a continuous polymerizer or a batch autoclave, In the polymerizer 12, the polyamide salt mixture/solution is heated under pressure in a substantially oxygen free inert atmosphere as is known in the art. The polyamide salt mixture/solution is polymerized into molten polymer. When the polymerizer 12 is a continuous polymerizer, the molten polymer can be fed from the continuous polymerizer 12 and conveyed, such as by a booster pump 14, through a transfer line 16 to at least a spinneret 18 of at least a spinning machine 20. Alternatively when the polymerizer 12 is a continuous polymerizer, or when the polymerizer 12 is a batch autoclave, the molten polymer can be extruded from the polymerizer 12, for example, in the form of strands. The extruded polymer strands can be quenched at a cooling station 26, such as in a water bath, into solid polymer strands and fed to a pelletizer 28 which cuts, casts or granulates the polymer into flake. Other terms used to refer to this "flake" include pellets, granulates and particulates. The flake can be any shapes and sizes to be suitable for use in the current invention.

Depending on the end use, the polymer flake can have a formic acid RV of at least about 30 to about 180. This converts to a molecular weight of about 15,000 number average molecular weight to about 25,000 number average molecular weight.

The flake can be fed to a holding vessel or conditioner 30 where the flake can be stored or conditioned, e.g., heated, water added or removed, and/or solid phase polymerized. Flake can be transported through a line 32 to a gravimetric or volumetric flake feeder 34, which is adapted to feed the flake into a melt extruder 36. The flake is melted in the melt extruder 36 and molten polymer is extruded from an outlet of the melt extruder 36 to a transfer line 38. The extruded molten polymer is conveyed, such as by a booster pump 40, through the transfer line 38 to at least a spinneret 18 of at least a spinning machine 20.

Typically, the residence time of the molten polymer in the melt extruder 36 and the transfer line 38 is about 3 to about 15 minutes, and preferably about 3 to about 10 minutes.

### 2. Functional Amine Compounds

Suitable functional amine compounds include members of stain resistance agent compounds, members of branching agent compounds, members of dye site availability modifying agent compounds, members of crystallization rate modifying agent compounds, members of crystalline fraction content modifying agent compounds, members of glass transition temperature modifying agent compounds, members of mechanical properties modifying agent compounds, and other aromatic or aliphatic diamines and triamines that incorporate a specific functionality into the polyamides. Mixtures of such amines can be used.

Preferred functional amine compounds are those with primary amine ends, such as o-tolidine disulfonic disodium salt (OTDS) for stain resistance, bis(hexamethylene)triamine (BHMT) as a branching agent compound, and 1,4-bis(3-aminopropyl)piperazine (3-PiP-3) as an acid dye site, 1,4-bis(methylamine) cyclohexane as a crystallization rate reducing agent, 2 methyl-1,5-pentane diamine and 1,3-diamine pentane as a crystalline fraction content and crystallization rate redudng agent, isophorone diamine as a glass transition temperature increasing agent, poly(oxyalkylene)-diamine (polyethers with terminal primary amines) such as poly(oxyethylene)-diamine and poly(oxypropylene)-diamine as elasticity increasing agent. The amine ends of a multifunctional amine compound reacts with the chain extender compound much like the amine end of a nylon chain.

### 3. Chain Extender Compound

Suitable chain extender compounds include optionally functionalized bis-N-acyl bislactam compounds and mixtures thereof. Preferred chain extender compounds are bis-N-acyl bis-caprolactam compounds and mixtures thereof. Functional chain extenders are those that contain a functional group within the acyl group that adds functionality to the polyamide. Suitable functional groups include members of p-aromatic groups for providing higher melting point polymers, members of sulfonic salts containing groups for stain resistances, members of triacyl triscaprolactams as branching agents, members of m-aromatic groups as crystallization rate modifying agent compounds, and members of phosphorous containing groups as an amidation catalyst agent compounds. Specific examples include (p-phenylene di-terephthalate) N,N' biscaprolactam (HQBTC) that accelerates crystallization, and phosphorous triscaprolactam that catalyzes amidation and causes some branching, terphthaloyl bis-caprolactam that increase melting point if used at about 5-10% with, for example, very low RV nylons (RV<30). Most preferred chain extender compounds include isophthaloyl bis-caprolactam (IBC), adipoyl bis-caprolactam (ABC), terphthaloyl bis-caprolactam (TBC), and mixtures thereof. The preferred and most preferred chain extender compounds are insensitive to the moisture content of polyamide at the levels of water generally present during polyamidation reactions, are effective over a wide range of starting polyamide RV's, and do not generate by-products.

Chain extender compounds function based on a reaction between a polyamide chain with an acid end group or an amine end group and a chain extender compound with two reactive end groups that react with either the amine end group or the acid end group of the polyamide chain.

Chain extender compounds which are optionally functionalized bis-N-acyl bislactam compounds react stoichiometrically with the amine end groups of polyamide chains and the amine end groups of functional diamines and triamines. By this is meant that one lactam end group of a bis-N-acyl bislactam compound reacts with one amine end group. This offers final RV and final end group balance predictability. As the amount of chain extender compound is increased, it connects more of the amine end groups of the polyamide chains and the amine end groups of functional diamines and triamines creating a higher RV polyamide with the functional diamine or triamine compound incorporated into its backbone. The maximum RV is reached when the moles of chain extender compound equals half of the equivalents of the amine end groups and all the amine end groups are consumed.

The optionally functionalized chain extender compound has a concentration (LEG) of lactam end groups of at least about 10 equivalents per million grams the reactant polyamide less than the sum of AEG(R) and the AEG(F). This leaves a concentration (AEG(P)) of amine end groups of at least about 10 equivalents per million grams of the reactant polyamide after the optionally functionalized chain extender compound connects the amine end groups of the polyamide chains and the functional diamine and triamine (if used) creating the higher RV polymer. This remaining "at least about 10 equivalents" of amine end groups has been found to be desirable to minimize hydrolysis of the higher RV product back to the starting reactants.

The chain extender compound or functional chain extender can be added to the melt extruder 36 simultaneously or consecutively with the flake and the optional functional diamine or triamine. In this case, when the flake is melted in the melt extruder 36, molten polymer and functional diamine or triamine contact and react with the liquid chain extender compound. Alternatively and, in fact, preferably, the chain extender compound or functional chain extender is added to the transfer line 16 or 38 with the molten polyamide and functional diamine and triamine. In this case, as soon as the chain extender compound or functional chain extender melts, if not already in a liquid phase, it contacts and reacts with the molten polyamide and functional diamine and triamine. Preferably when the chain extender compound or functional chain extender is added to the transfer line 16 or 38, the chain extender compound or functional chain extender is in a liquid phase. Adding the chain extender compound or functional chain extender to the extruder 36 or the transfer line 16 or 38 may eliminate the need for the conditioner, or any solid state polymerization vessel, 30 prior to the extruder 36 or the transfer line 38.

In each case, a particularly convenient method for adding the chain extender compound or functional chain extender, and functional diamine and/or triamine, is to provide the chain extender compound or functional chain extender and the functional diamine and/or triamine in a solution of mixed ingredients including a carrier. The purpose for adding the chain extender compound or functional chain extender and functional diamine and/or triamine mixed with a carrier is to dilute the chain extender compound or functional chain extender and functional diamine and/or triamine to allow a more accurate measurement of the amount of chain extender compound or functional chain extender being added. It further enhances dispersal of the chain extender compound in the polyamide. Suitable carriers include low melting (i.e., melts below 150°C) polyamides, like poly(N,N'-dibutylhexamethylene dodecanediamide) and other polymers that disperses in polyamide, like partially maleated (e.g., 3%) polypropylene, partially maleated (e.g., 3%) polyethylene, and aliphatic polyesters. Preferred carriers are the low melting polyamides. The chain extender or functional chain extender and diamine or triamine can be included with the same carrier or a different carrier as desired.

### 4. Catalysts

No catalyst is needed in this invention. However, one or more polyamidation catalyst can optionally be added, normally to the polymerizer 12 simultaneously or consecutively with the salt mixture/solution, but also to the melt extruder 36 simultaneously or consecutively with the flake and/or to the transfer line 16 or 38 thereby contacting the molten polyamide.

The effect of adding a polyamidation catalyst, in addition to a chain extender compound, is that the catalyst shortens the time between the initial contact time between the molten polyamide and the chain extender compound or functional chain extender and the point in time that the resulting product needs to be quenched to room temperature such that the product has a final RV greater than the starting RV and optionally a concentration of amine end groups (AEG(P)) as defined by formula (1) above.

Polyamidation catalysts suitable for use in the process of the invention include phosphonic acids, phosphinic acids and their derivatives and salts. Suitable illustrative catalysts include those described in U.S. Patents 3,365,428; 3,763,113; 3,944,518; 4,912,175; 4,966,949 and references therein, each incorporated by reference herein. Of these, the preferred catalysts are phenylphosphonic acid and 2-(2'-pyridyl)ethylphosphonic acid.

If a catalyst is used, an effective amount of the catalyst(s) is added. Generally the catalyst is added to the polymerizer 12 in an amount from about 0.25 moles up to about 5 moles per million grams, mpmg, of polyamide (typically about 50 ppm to 1000 ppm based on the polyamide. Preferably, the catalyst is added in an amount of about 0.4 moles to about 0.8 moles per million grams, mpmg, of polyamide (about 80 ppm to 160 ppm based on the polyamide). This range provides commercially useful rates of polymerization during initial polymerization and/or after remelting the polymer in the form of flake such as in the extruder 36 and/or the transfer line 16 or 38 under the conditions of the current invention, while minimizing deleterious effects which can occur when catalyst is used at higher levels, such as pack pressure rise during subsequent spinning.

A particularly convenient method for adding the polyamidation catalyst is to provide the catalyst in a solution of polymer ingredients in which polymerization is initiated, e.g., by addition to a salt solution, such as the hexamethylene-diammonium adipate solution used to make nylon 6,6.

Instead of or in addition to one or more liquid phase polyamidation catalyst, one or more solid state polymerization catalyst can optionally be added, such as disclosed in international Patent Application WO 98/23666, incorporated herein by reference in its entirety.

Catalysts employed in prior art polyamide production processes are generally not effective at increasing polyamide RV where the starting polyamide has an RV below 30 and most are not effective where the starting polyamide has an RV below 45. When a catalyst and a chain extender compound or functional chain extender and functional diamine and/or triamine is added in accordance with this invention, the RV of the reactant polyamide can be as low as about 4 where the chain extender compound or functional chain extender is effective at increasing the polyamide RV until the polyamide RV is high enough for both the chain extender or functional chain extender and the catalyst to become effective at increasing its RV.

### Additives

Usual amounts of additives as are known in the art can be added to the polyamide in the process of this invention. They can be added when the chain extender compound and diamine and/or triamine is contacted with the polyamide or before. For example, typical additives include plasticizers, delustrants, pigments, dyes, light stabilizers, heat and/or oxidation stabilizers, antistatic additives for reducing static, additives for modifying dye ability, agents for modifying surface tension, etc.

The molten polymer in the transfer line 16 or 38 and flake in the conditioner 30 can contain variable amounts of absorbed water. Water can also be added to the conditioner 30 or the melt extruder 36 as a control on the final RV of the product. The addition of water reduces the RV of the product.

### B. Forming Step

During the contacting step, the reactant polyamide, functional diamine or triamine, and the optionally functionalized chain extender compound react forming a modified polyamide having a higher RV than the RV of the reactant polyamide.

After the contacting step, a product can be formed from the modified polyamide. As with polyamide that was used prior to this invention to make product, the modified polyamide of this invention must have a molecule weight suitable for use in forming the desired end product. For instance, when the product is a filament, the modified polyamide must be of filament-forming molecular weight in order to melt spin into filaments. For most end uses, including the production of filaments, the modified polyamides can have any molecular weight distribution.

Products that can be made by the process of the invention include flake, spun articles (e.g., filaments), blow molded artides (e.g., bottles), extruded articles (e.g., films), and injection molded shaped articles.

Referring again to Figure 1, preferably, the article is formed by spinning the polyamide into at least one filament 46. Metering pumps 41 can be used to force the molten polymer from a manifold 42 connected to the transfer line 16 or 38 through spin filter packs 44 and then the spinnerets 18, each having a plurality of capillaries through the spinneret 18 thereby spinning the molten polymer through the capillaries into a plurality of filaments 46.

### C. Optional Quenching Step

The product may be quenched to room temperature, however quenching is not necessary. For example, the product can be quenched to room temperature such that the product has a final RV greater than the starting RV.

In an embodiment, the quenched product has a concentration of amine end groups (AEG(P)) as defined by the formula:

AEG(P) = {AEG(R) + AEG(F) - LEG} ± X (1)

wherein:
- AEG(P): is the concentration of amine end groups in the quenched product in units of equivalents/1,000,000 gms of the product;
- AEG(R): is the concentration of amine end groups in the reactant polyamide in units of equivalents/1,000,000 gms of the reactant polyamide;
- AEG(F): is the concentration of amine end groups in the functional diamine or triamine compound in units of equivalents/1,000,000 gms of the reactant polyamide;
- LEG: is the concentration of lactam end groups in the chain extender compound or functional chain extender in units of equivalents/1,000,000 gms of the reactant polyamide; and
- X: is any number in a range of about 0 to about 15, for example, from 0 to 5.

The filaments 46 from each spinneret 18 are quenched typically by an air flow (illustrated in Figure 1 by arrows 48) transverse to the length of the filaments 46. The filaments 46 can then be converged by a convergence device 50 into a yam and wound by a wind-up device 54, for instance, on a tube 56 into a package 58.

The resulting filaments 46 can be made into yarns 52 and fabrics for a variety of applications well know in the art. The product formed by the process of the invention can be subsequently processed as long as it is not remelted in such process steps. For instance, after being formed, filaments 46 can be subsequently drawn, textured, crimped, and/or cut, etc., all as known in the art.

When chain extender compounds were used with polyamides prior to this invention, it was not appreciated that the product can be quenched in a non equilibrium state as per formula (1) above to freeze the polymer in its chain extended state retaining the high RV achieved by adding the chain extender compound. It is believed that the reason the product is preferably quenched per formula (1) above is that the addition of the optionally functional chain extender compound appears to shift the polyamide reaction away from its equilibrium state.

This can be explained in reference to the following schematic polyamide (i.e., nylon 6,6) chemical reaction wherein one reactant (i.e., hexamethylenediamine (H₂N-(CH₂)₈-NH₂)) has an amine end group (-NH₂) and another reactant (i.e., adipic acid (HOOC-(CH₂)₄-COOH)) has an acid group (-COOH) and the products comprise polyamide chains with multiple amide groups (-NHCO-) along its chains and water (H₂O). ${\text{H}}_{\text{2}} {\text{N-(CH}}_{\text{2}} {\text{)}}_{\text{8}} {\text{-NH}}_{\text{2}} {\text{+ HOOC-(CH}}_{\text{2}} {\text{)}}_{\text{4}} \text{-COOH} {\text{↔ R-(HN-(CH}}_{\text{2}} {\text{)}}_{\text{6}} {\text{-NHCO-(CH}}_{\text{2}} {\text{)}}_{\text{4}} {\text{-CO)}}_{\text{n}} {\text{-R + H}}_{\text{2}} \text{O}$ where
- R: is H or OH; and
- n: is about 10 to about 150.

This reaction continues until an equilibrium is established between the reactants and the products. This equilibrium can be expressed by the following equation.

K_{eq} = [-NHCO-][H₂O] / [-NH₂][-COOH] (4)

where
- K_{eq}: is a constant;
- [-NHCO-]: is the concentration of amide groups;
- [H₂O]: is the concentration of water,
- [-NH₂]: is the concentration of free amine end groups; and
- [-COOH]: is the concentration of free acid end groups.

However, when an optionally functionalized bis-N-acyl bislactam compound is added to the reaction mixture, a pair of amine end groups is consumed by each of the bis-N-acyl bislactam molecules. This decreases the concentration of amine end groups, increases the number of amide groups increasing the polymer RV, with no change in acid end groups and water.

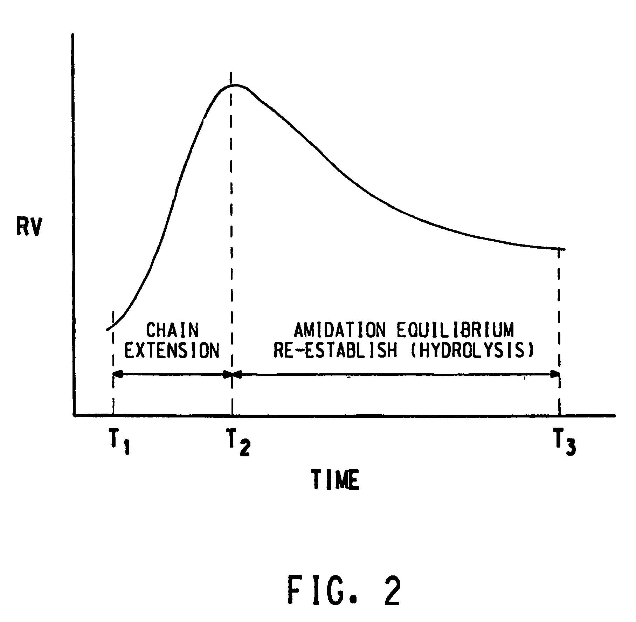

This is illustrated in Figure 2, which is a graph of RV versus time. At time T₁, optionally functionalized chain extender compound is contacted with polyamide 6,6 and/or reactants for producing polyamide, all in liquid state. The ingredients rapidly react to a point at time T₂ where the RV has increased to a maximum possible value which surprisingly is not the equilibrium state. It was surprisingly discovered that if the polymer is kept in a liquid state and the product is not quenched to stop the reaction, with time the polyamide will react with water (hydrolyze) back to its equilibrium state generating more amine end groups and acid end groups, and fewer amide groups and a lower RV, as illustrated at time T₃ in Figure 2. This results in less than optimum effectiveness of the optionally functionalized chain extender compound. Similarly, if product is quenched according to the invention, but is subsequently remelted, water in the mixture will drive the reaction back to an equilibrium state with the lower RV illustrated at time T₃ in Figure 2. The rate of the hydrolysis part of the curve depends on temperature, moisture content, and the presence of an amidation catalyst.

The invention recognizes that the desired product can be quenched to room temperature to maintain the polymer at a RV level within a limited defined range from its maximum RV level to retain the benefit of the high RV produced by the addition of the chain extender compound. This is captured by formula (1). In formula (1), AEG(P) is the actual or measured concentration of amine end groups in the quenched product. The difference between the concentration of amine end groups in the reactant polyamide plus the functionalized amine if used, and concentration of the lactam end groups in the optionally functionalized chain extender compound, {AEG(R) +AEG(F) - LEG}, is the theoretical or calculated amine end group concentration that would result from a stoichiometric reaction between the chain extender compound and the polyamide. Formula (1) indicates that the product be quenched when the actual or measured amine end group concentration in the polyamide product, AEG(P), is within a deviation factor, X, which is plus or minus 15 amine end groups/million grams of polyamide of the theoretical or calculated amine end group concentration that would result from a stoichiometric reaction between chain extender compound and the polyamide. As such, deviation factor X can be any number in a range of about 0 to about 15. Preferably, X is any real number in a range of about 0 to about 5. As used herein, the term "number" means any real number including integers and fractions.

### II. Product

The invention is further directed to a product made by the process of the invention. The product can comprise a filament which comprises a synthetic melt spun polymer including:
polyamide repeating units or functional diamine or triamine units (R₁);
polyamide chain extender moieties (R₂), each independently, selected from the group consisting of functionalized or non-functionalized bis-N-acyl bislactam moieties; and
terminal groups (R₃), each independently, selected from the group consisting of a hydrogen atom and a hydroxyl group;
the polymer including chains, each independently, having a chemical structure:

   R₃-(R₁-R₂)_{y}-R₁-R₃ (2)

   wherein y is an integer of 1-14; and
the filament has a formic acid relative viscosity of at least about 30.

Suitable polyamide repeating units (R₁), each independently, can be selected from the group consisting of (i) -{CO(CH₂)ₖ-CONH-(CH₂)ₘNH}ₙ-, where k and m, each independently, is an integer of 1-12, and n is an integer of 10-140, and (ii) - {NH(CH₂)ₓ-CO}_{z}- where x is an integer of 1-12 and z is an integer of 20-280. In formula (i), when k=4 and m=6, the formula represents a repeating unit of nylon 6,6. In formula (ii), when x=5, the formula represents a repeating unit of nylon 6.

Suitable polyamide chain extender moieties (R₂), each independently, can be selected from optionally functionalized bis-N-acyl bis-caprolactam moieties. Preferably, R₂, each independently, is selected from the group consisting of an isophthaloyl bis-caprolactam (IBC) moiety, an adipoyl bis-caprolactam (ABC) moiety, a terphthaloyl bis-caprolactam (TBC) moiety, and (p-phenylene diterephthalate) N,N-biscaprolcatam (HQBTC).

Other products of the invention would be produced utilizing the reactants disclosed herein and/or following the processes described herein.

### Advantages

This invention enables higher capital productivity, lower manufacturing cost, and greater process flexibility than prior methods for manufacturing functional high RV polyamides. The functionalization and chain extension process of the invention is very rapid and occurs in minutes or seconds as opposed to hours as in prior methods. The resulting filaments can be made into yarns and fabrics for a variety of applications well know in the art.

### DEFINITIONS AND TEST METHODS

Unless otherwise described, the following test methods were or can be used to determine the following items.

Relative visoosity or formic acid relative viscosity (RV) of polyamides as used herein refers to the ratio of solution and solvent viscosities measured in a capillary viscometer at 25°C. The solvent is formic acid containing 10% by weight of water. The solution is 8.4% by weight polyamide polymer dissolved in the solvent. This test is based on ASTM Standard Test Method D 789.

Actual or measured concentration of amine end groups (AEG) can be determined by the following steps. Weigh exactly 1.000 gms of a dry ground polyamide sample and place it in a cup equipped with a magnetic stirrer. Add 70 ml of 85/15 by volume of phenol/methanol (menol) solution to the cup. Cap it and stir until the sample is dissolved. Titrate the polyamide-menol solution with 0.025N perchloric acid (HClO₄) in methanol using an automatic titrater. 70 ml of pure menol solution (blank) is titrated the same way. The concentration of amine end groups (AEG) is then determined using the following formula:

amine end groups (AEG) = (A-B)(N)(1000) / (W) (5)

where
- A =: ml of HClO₄ solution to titrate the polyamide-menol solution.
- B =: ml of HClO₄ solution to titrate the blank.
- N =: Normality of HClO₄ solution in equivalents per liter.
- W =: Weight of polyamide sample in gms.

The units of AEG is equivalents of amine end groups per 1,000,000 gms of polyamide polymer. AEG(R) refers to the amine end groups of the starting or reactant polyamide. Whereas, AEG(P) refers to the amine end groups of the product polyamide.

Actual or measured concentration of carboxyl end groups (CEG) can be determined by the following steps. Weigh exactly 3.000 gms of a dry ground polyamide sample and place in a cup equipped with a magnetic stirrer. Add 100 ml of benzyl alcohol to the cup. Cap it and stir with heat until the sample is dissolved. Using phenolphthalein indicator, titrate the content of the beaker with a standard 0.1 N potassium hydroxide (KOH) aqueous solution. 100 ml of pure benzyl alcohol (control) is titrated the same way. The concentration of carboxyl end groups (CEG) is then determined using the following formula:

carboxyl end groups (CEG) = (A-B)(N)(1000)/(W) (6)

where
- A =: ml of KOH solution to titrate the polyamide solution.
- B =: ml of KOH solution to titrate the blank.
- N =: Normality of KOH aqueous solution in equivalents per liter.
- W =: Weight of polyamide sample in gms.

The units of CEG is equivalents of carboxyl end groups per 1,000,000 gms of polyamide polymer. CEG(R) refers to the carboxyl end groups of the starting or reactant polyamide. Whereas. CEG(P) refers to the carboxyl end groups of the product polyamide.

Similar suitable methods for determining AEG and CEG are described in The Encyclopedia of industrial Chemical Analysis, Vol. 17, John Wiley & Sons, New York, 1973, p. 293-294, and U.S. Patent 3,730,685, both incorporated herein by reference in their entireties.

Crystallization rate is measured by placing about a 5 mg of polymer sample in Perkin-Elmer DSC-7. The sample is heated to 300°C at 50°C/min rate, held at 300°C for 3 minutes, and then rapidly cooled at 200°C/min to a specific temperature in the range of 225°C - 260°C (the crystallization temperature) and then held there for 10-60 minutes till crystallization is complete and no more energy is released by the sample. The energy released by the completed crystallization process is recorded. The energy release as a function of time is recorded and the time required to release half of the total energy released is determined and is define as a half life crystallization time

### EXAMPLES

This invention will now be illustrated by the following non-limiting specific examples.

### Synthesis of Chain Extender Compounds

The adipoylbiscaprolactam (ABC) chain extender compound used in the following examples was prepared by dissolving 136 grams of caprolactam (1.2 moles) in 500 ml tetrahydrofuran (THF) in a 2 liter Erlenmeyer flask, cooling the resulting solution in an ice bath to below 5°C, and slowly adding 100 grams of adipoyl chloride (0.55 mole) with stirring. The temperature was maintained below 5°C. 200 ml of pyridine was added to the stirred solution to form a precipitate of ABC and pyridinum chloride. The mixture was stirred for 1/2 hour below 5°C, then heated to boiling for 30 minutes, followed by pouring the hot solution into a 3 gallon (13.5 liter) bucket half filled with a 50/50 mixture of water and ice with vigorous stirring. The ABC precipitates and all other ingredients stay in solution. Solid ABC (155.8 grams) was collected by suction filtration.

The isophthaloylbiscaprolactam (IBC) was prepared by the same method as the ABC except that the 100 gms of adipoyl chloride was replaced by 112 gms of isophthaloyl chloride.

The terephthaloylbiscaprolactam (TBC) was prepared by the same method as the ABC except that the 100 gms of adipoyl chloride was replaced by 112 gms of terephthaloyl chloride.

The (p-phenylene di-terephthalate) N,N' biscaprolactam) (HQBTC) was prepared by dissolving 1.1 gms of hydroquinone in 15 ml tetrahydrofuran (THF) and separately dissolving 4.06 gms of terephthaloyl chloride in 40 ml of THF. The terephthaloyl chlonde/THF solution was cooled in an ice bath to below 5°C, and the hydroquinone solution was added to it slowly with stirring while maintaining the temperature below 5°C. 3.4 gms of triethylamie was added slowly to the solution while maintaining the temperature below 5°C. 2.35 gms of caprolactam dissolved in 20 ml of THF was added slowly to the solution followed by 3 ml of triethylamine, again while maintaining the temperature below 5°C. The reaction mixture was left stirring overnight. 100 ml of water was added to the reaction mixture and the solid HQBTC product was collected by filtration and washed with water.

### Examples 1 and 2

These examples demonstrates the use of the multifunctional amine compound o-tolidine disulfonic acid disodium salt with isophthaloylbiscaprolactam (IBC) to introduce sodium sulfonate groups into the backbone of the polymer to give stain-resistance functionality to acidic dyes to the nylon polymer. Two different reactant nylon 66 homopolymers with different RV and LEG(R) were used. The o-tolidine disulfonic acid disodium salt was synthesized by neutralizing one mole of o-tolidine disulfonic acid (purchased from "Wakayama Seika Kopyo-Japan") with two moles of sodium carbonate in water.

Isophthaloylbiscaprolactam (IBC) and o-tolidine disulfonic disodium salt (OTDS) were added to 6.00 g of the nylon 66 homopolymer and mixed well in the solid state in a test tube equipped with a small wire stirrer. The tube was covered with a stopper, blanketed with nitrogen, and inserted in a molten metal bath at 286°C for a period of 4 minutes, followed by quenching the tube in water. After quenching, the polymer was removed from the tube and tested. The polymer had a higher RV than the reactant polymer and exhibited stain resistance to acid dyes as a result of the incorporation of the o-tolidine disulfonic disodium salt into the nylon backbone.

**TABLE 1**

| **Example** | Reactant Nylon | | IBC (gms) | OTDS (gms) | Product Nylon RV | Stain Resistance |
|---|---|---|---|---|---|---|
| | RV | AEG(R) | | | | |
| 1 | 37.9 | 97.5 | 0.214 | 0.14 | 56.4 | Yes |
| 2 | 17.1 | 244.0 | 0.380 | 0.14 | 88.3 | Yes |

### Example 3

This example demonstrates the use of a "rigid rod" chain extender to accelerate the polymer crystallization rate. In particular, it shows that the incorporation of(p-phenylene di-terephthalate) moiety in the polymer backbone increase the polymer cystalization rate by 3x.

0.12 g of (p-phenylene di-terephthalate) N,N' biscaprolactam was added to 6.00 g of the nylon 66 homopolymer (RV = 37.9 of Example 1), heated and quenched as described in Example 1. After quenching, the polymer was removed from the tube and tested. The polymer had a RV of 75.3 and the polymer crystallization rate as measured by DSC was three times higher than the starting polymer.

### Examples 4 and 5

These two examples demonstrates the insertion of a branching agent, a functional triamine (BHMT) in the backbone of the polymer chain. BHMT was purchased from "Aldrich - USA".

Isophthaloylbiscaprolactam (IBC) and bis (hexamethylene) triamine (BHMT) were added to 8.00 gms of nylon 66 (RV = 35.6; AEG(R) = 88.1) and mixed well in the solid state in a test tube. The tube had a small wire stirrer, covered with a stopper and was blanketed with nitrogen. The test tube was inserted in a molten metal bath at 286°C for a period of 4 minutes, followed by quenching the tube in a room temperature water bath. The polymer was removed from the tube and tested. Table 1 shows the amounts used and the product RV and AEG

**TABLE 2**

| **Example** | BHMT (gms) | AEG(F) | IBC (gms) | LEG | Product Nylon | | Calculated AEG(P) [AEG(R)+AEG(F)-LEG] | X |
|---|---|---|---|---|---|---|---|---|
| | | | | | RV | AEG(P) | | |
| 4 | 0.0057 | 10 | 0.086 | 60 | 70.6 | 38.0 | 38.1 | 0.1 |
| 5 | 0.0086 | 15 | 0.086 | 60 | 63.8 | 44.5 | 43.1 | 1.4 |

### Example 6

This example demonstrates the use of a functional dye site 1,4-Bis (3-aminopropyl) piperazine (3-PiP-3) for deep dying. 3PiP3 was purchased from "Aldrich - USA".

0.107 gms of isophthaloylbiscaprolactam (IBC) and 0.016 gms of 1,4-B is (3-aminopropyl) piperazine (3-PiP-3) was added to 8.00 gms of nylon 66 (RV = 35.6; AEG(R) = 88.1) and mixed well in the solid state in a test tube. The tube had a small wire stirer, covered with a stopper and was blanketed with nitrogen. The test tube was inserted in a molten metal bath at 286°C for a period of 4 minutes, followed by quenching the tube in a room temperature water bath. The polymer was removed from the tube and tested. The produced polymer had a RV = 64.5 and AEG(P) = 51.1.

Those skilled in the art, having the benefit of the teachings of the present invention as hereinabove set forth, can effect numerous modifications thereto. These modifications are to be construed as being encompassed within the scope of the present invention as set forth in the appended claims.

## Claims

1. A process for preparing a modified polyamide, comprising:
contacting a reactant polyamide and (i) a chain extender compound selected from the group consisting of bis-N-acyl bislactam compounds and mixtures thereof and a functional diamine or triamine compound or (ii) a functional chain extender selected from the group consisting of functionalized bis-N-acyl bislactam compounds and a functional diamine or triamine compound, in a liquid phase,
the reactant polyamide having a starting RV, a concentration of amine end groups (AEG(R)), and a concentration of carboxyl end groups (CEG(R)), the functional diamine or triamine compound having a concentration of amine end groups of AEG(F), the chain extender compound having a concentration of lactam end groups (LEG) of at least about 10 equivalents per million grams of the reactant polyamide less than the sum of AEG(R) and AEG(F), for a duration of about 0.5 minutes to about 10 minutes, increasing the RV of the reactant polyamide.

2. The process of Claim 1, wherein the reactant polyamide is selected from the group consisting of poly(hexamethylene adipamide), poly(e-caproamide), polydodecanotactam, poly(tetramethyleneadipamide), poly(hexamethylene sebacamide), a polyamide formed of n-dodecanedioic acid and hexamethylenediamine, a polyamide of dodecamethylenediamine and n-dodecanedioic acid, copolymers thereof, and mixtures thereof.

3. The process of Claim 1, wherein a chain extender compound (i) is used.

4. The process of Claim 1, wherein the chain extender compound or functional chain extender is selected from the group consisting of bis-N-acyl bis-caprolactam compounds and mixtures thereof.

5. The process of Claim 1, wherein the chain extender compound or functional chain extender is selected from the group consisting of isophthaloyl bis-caprolactam, adipoyl bis-caprolactam, terphthaloyl bis-caprolactam, (p-phenylene di-terephthalate) N,N' biscaprolactam, and mixtures thereof.

6. The process of Claim 1, wherein the diamine or triamine compounds are selected from the group consisting of stain resistance agents, branching agents, dye site availability modifying agents, and mixtures thereof.

7. The process of Claim 6, wherein:
the stain resistance agent compounds are selected from the group consisting of o-tolidine disulfonic sodium salts, the branching agent compounds are selected from the group consisting of bis (hexamethylene) triamine, and the dye site availability modifying agent compounds are selected from the group consisting of 1,4-Bis (3-aminopropyl) piperazine.

8. The process of Claim 1, wherein the modified polyamide is formed into a product other than flake.

9. The process of Claim 1, further comprising quenching the modified polyamide to room temperature such that the product has a concentration of amine end groups (AEG(P)) as defined by the formula:
AEG(P) = {AEG(R) + AEG(F) - LEG} ± X
wherein:
AEG(P) is the concentration of amine end groups in the quenched product in units of equivalents/1,000,000 gm of the product;
AEG(R) is the concentration of amine end groups in the reactant polyamide in units of equivalents/1,000,000 gm of the reactant polyamide;
AEG(F) is the concentration of amine end groups in the functional diamine or triamine compound in units of equivalents/1,000,000 gm of the reactant polyamide;
LEG is the concentration of lactam end groups in the chain extender compound or functional chain extender in units of equivalents/1,000,000 gm of the reactant polyamide; and
X is any number in a range of about 0 to about 15.

10. The process of Claim 9, wherein X is any number in a range of about 0 to about 5.

11. A product made by the process of claim 1.

12. A filament, comprising:
a synthetic melt spun polymer including:
polyamide repeating units or functional diamine or triamine units (R₁);
polyamide chain extender moieties (R₂), each independently, selected from the group consisting of optionally functionalized bis-N-acyl bislactam moieties;
wherein at least one of functional diamine, functional triamine, or functional bis-N-acyl bislactam moieties are present, and
terminal groups (R₃), each independently, selected from the group consisting of a hydrogen atom and a hydroxyl group;
the polymer including chains, each independently, having a chemical structure:
R₃-(R₁-R₂)_{y}-R₁-R₃ (2)
wherein y is an integer of 1-14; and
the filament has a formic acid relative viscosity of at least about 30.

13. The filament of Claim 12, wherein the members of the polyamide repeating units (R₁), each independently, are selected from the group consisting of (i) - {CO(CH₂)ₖ-CONH-(CH₂)ₘNH}ₙ-, where k and m, each independently, is an integer of 1-12, and n is an integer of 10-140, and (ii) -{NH(CH₂)ₓ-CO}_{z}- where x is an integer of 1-12 and z is an integer of 20-280.

14. The filament of Claim 12, wherein (R₁) includes functionalized diamine or functionalized triamine units.

15. The filament of Claim 12, wherein the optionally functionalized chain extender moieties, each independently, are selected from the group consisting of bis-N-acyl bislactam moieties.

16. The filament of Claim 12, wherein the chain extender moieties, each independently, are selected from the group consisting of an isophthaloyl bis-caprolactam moiety, an adipoyl bis-caprolactam moiety, (p-phenylene di-terephthalate) N,N' bis-caprolactam, and a terphthaloyl bis-caprolactam moiety.

17. The filament of Claim 12, wherein the functional amine compounds are used and are selected from the group consisting of stain resistance agents, branching agents, dye site availability modifying agents, and mixtures thereof.

18. The filament of Claim 17, wherein the stain resistance agent compounds are selected from the group consisting of o-tolidine disulfonic sodium salts, the branching agent compounds are selected from the group consisting of bis (hexamethylene) triamine, and the dye site availability modifying agent compounds are selected from the group consisting of 1,4-Bis (3-aminopropyl) piperazine.

## Patentansprüche

1. Verfahren zur Herstellung eines modifizierten Polyamids, umfassend:
Kontaktieren eines Reaktant-Polyamids und (i) einer Kettenverlängerer-Verbindung, die aus der Gruppe ausgewählt ist, bestehend aus Bis-N-acyl-bislactam-Verbindungen und Gemischen davon und einer funktionellen Diamin- oder Triaminverbindung oder (ii) eines funktionellen Kettenverlängerers, der aus der Gruppe ausgewählt ist, bestehend aus funktionalisierten Bis-N-acyl-bislactam-Verbindungen und einer funktionellen Diamin- oder Triaminverbindung, in einer flüssigen Phase,
wobei das Reaktant-Polyamid eine RV am Ausgangspunkt, eine Konzentration von Amin-Endgruppen (AEG(R)) und eine Konzentration von Carboxyl-Endgruppen (CEG(R)) aufweist, wobei die funktionelle Diamin- oder Triaminverbindung eine Konzentration von Amin-Endgruppen von AEG(F) aufweist, wobei die Kettenverlängerer-Verbindung eine Konzentration von Lactam-Endgruppen (LEG) von mindestens ca. 10 Äquivalenten pro eine Million Gramm des Reaktant-Polyamids weniger als die Summe von AEG(R) und AEG(F) aufweist, für eine Dauer von ca. 0,5 Minuten bis ca. 10 Minuten, wobei die RV des Reaktant-Polyamids erhöht wird.

2. Verfahren nach Anspruch 1, worin das Reaktant-Polyamid ausgewählt ist aus der Gruppe, bestehend aus Poly(hexamethylen-adipamid), Poly(ε-caproamid), Polydodecanlactam, Poly(tetramethylen-adipamid), Poly(hexamethylen-sebacamid), einem Polyamid, gebildet aus n-Dodecandisäure und Hexamethylendiamin, einem Polyamid von Dodecamethylendiamin und n-Dodecandisäure, Copolymeren davon und Gemischen davon.

3. Verfahren nach Anspruch 1, worin eine Kettenverlängerer-Verbindung (i) verwendet wird.

4. Verfahren nach Anspruch 1, worin die Kettenverlängerer-Verbindung oder der funktionelle Kettenverlängerer aus der Gruppe ausgewählt ist, bestehend aus Bis-N-acyl-bis-caprolactam-Verbindungen und Gemischen davon.

5. Verfahren nach Anspruch 1, worin die Kettenverlängerer-Verbindung oder der funktionelle Kettenverlängerer aus der Gruppe ausgewählt ist, bestehend aus Isophthaloyl-bis-caprolactam, Adipoyl-bis-caprolactam, Teiphthaloyl-bis-caprolactam, (p-Phenylen-di-terephthalat)-N,N'-bis-caprolactam und Gemischen davon.

6. Verfahren nach Anspruch 1, worin die Diamin- oder Tnaminverbindungen aus der Gruppe ausgewählt sind, bestehend aus Fleckenbeständigkeitsmitteln, Verzweigungsmitteln, Mitteln zur Modifikation der Verfügbarkeit von Färbeorten, und Gemischen davon.

7. Verfahren nach Anspruch 6, worin:
die Verbindungen der Fleckenbeständigkeitsmittel aus der Gruppe ausgewählt sind, bestehend aus der o-Tolidin-disulfonsäure, Natriumsalzen, die Verbindungen der Verzweigungsmittel aus der Gruppe ausgewählt sind, bestehend aus Bis(hexamethylen)triamin und die Verbindungen der Mittel zur Modifikation der Verfügbarkeit von Färbeorten aus der Gruppe ausgewählt sind, bestehend aus 1,4-Bis-(3-aminopropyl)piperazin.

8. Verfahren nach Anspruch 1, worin das modifizierte Polyamid zu einem Produkt mit Ausnahme von Flocken gebildet wird.

9. Verfahren nach Anspruch 1, weiter umfassend das Quenchen des modifizierten Polyamids auf Raumtemperatur dergestalt, dass das Produkt eine Konzentration von Amin-Endgruppen (AEG(P)) wie durch die folgende Formel definiert aufweist:
AEG(P) = {AEG(R) + AEG(F) - LEG} ± X
worin:
AEG(P) die Konzentration von Amin-Endgruppen im gequenchten Produkt in Einheiten von Äquivalenten/1 000 000 g des Produktes darstellt;
AEG(R) die Konzentration von Amin-Endgruppen im Reaktant-Polyamid in Einheiten von Äquivalenten/1 000 000 g des Reaktant-Polyamids darstellt;
AEG(F) die Konzentration von Amin-Endgruppen in der funktionellen Diamin- oder Triaminverbindung in Einheiten von Äquivalenten/1 000 000 g des Reaktant-Polyamids darstellt;
LEG die Konzentration von Lactam-Endgruppen in der Kettenverlängerer-Verbindung oder dem funktionellen Kettenverlängerer in Einheiten von Äquivalenten/1 000 000 g des Reaktant-Polyamids darstellt; und
X jedwede Zahl im Bereich von ca. 0 bis ca. 15 darstellt.

10. Verfahren nach Anspruch 9, worin X jedwede Zahl im Bereich von ca. 0 bis ca. 5 darstellt.

11. Produkt, das anhand des Verfahrens nach Anspruch 1 hergestellt wird.

12. Filament, umfassend:
Ein synthetisches schmelzgesponnenes Polymer, das Folgendes einschließt::
Polyamid-Wiederholungseinheiten oder funktionelle Diamin- oder Triamin-Einheiten (R₁);
Komponenten der Polyamid-Kettenverlängerer (R₂), wobei jede unabhängig aus der Gruppe ausgewählt ist, bestehend aus optional funktionalisierten Bis-N-acyl-bislactam-Komponenten;
worin mindestens eine der funktionellen Diamin-, funktionellen Triamin- oder funktionellen Bis-N-acyl-bislactam-Komponenten anwesend smd, und
terminale Gruppen (R₃), wobei jede unabhängig aus der Gruppe ausgewählt ist, bestehend aus einem Wasserstoffatom und einer Hydroxylgruppe;
das Polymer, das Ketten einschließt, wobei jede unabhängig eine chemische Struktur wie folgt aufweist:
R₃-(R₁-R₂)_{y}-R₁-R₃ (2)
worin y eine ganze Zahl von 1 - 14 darstellt; und
das Filament eine relative Viskosität (Ameisensäure) von mindestens ca. 30 aufweist.

13. Filament nach Anspruch 12, worin die Glieder der Polyamid-Wiederholungseinheiten (R₁), jeweils unabhängig aus der Gruppe ausgewählt sind, bestehend aus (i) -{CO(CH₂)ₖ-CONH-(CH₂)ₘNH}ₙ-, worin k und m, jeweils unabhängig, eine ganze Zahl von 1 - 12 darstellen und n eine ganze Zahl von 10 - 140 darstellt und (ii) -{NH(CH₂)ₓ-CO}_{z}-, worin x eine ganze Zahl von 1 - 12 darstellt und z eine ganze Zahl von 20 - 280 darstellt.

14. Filament nach Anspruch 12, worin (R₁) funktionalisierte Diamin- oder funktionalisierte Triamin-Einheiten darstellt.

15. Filament nach Anspruch 12, worin die optional funktionalisierten Komponenten der Kettenverlängerer jeweils unabhängig aus der Gruppe ausgewählt sind, bestehend aus Bis-N-acyl-bislactam-Komponenten.

16. Filament nach Anspruch 12, worin die Komponenten der Kettenverlängerer, jeweils unabhängig, aus der Gruppe ausgewählt sind, bestehend aus einer Isophthaloyl-bis-caprolactam-Komponente, einer Adipoyl-bis-caprolactam-Komponente, (p-Phenylen-di-terephthalat)-N,N'-bis-caprolactam und einer Terphthaloyl-bis-caprolactam-Komponente.

17. Filament nach Anspruch 12, worin die funktionellen Aminverbindungen verwendet werden und aus der Gruppe ausgewählt sind, bestehend aus Fleckenbeständigkeitsmitteln, Verzweigungsmitteln, Mitteln zur Modifikation der Verfügbarkeit von Färbeorten, und Gemischen davon.

18. Filament nach Anspruch 17, worin die Verbindungen der Fleckenbeständigkeitsmittel aus der Gruppe ausgewählt sind, bestehend aus der o-Tolidin-disulfonsäure, Natriumsalzen, die Verbindungen der Verzweigungsmittel aus der Gruppe ausgewählt sind, bestehend aus Bis-(hexamethylen)triamin und die Verbindungen der Mittel zur Modifikation der Verfügbarkeit von Färbeorten aus der Gruppe ausgewählt sind, bestehend aus 1,4-Bis-(3-aminopropyl)piperazin.

## Revendications

1. Procédé pour préparer un polyamide modifié, comprenant:
la mise en contact d'un réactant polyamide et (i) d'un composé allongeur de chaîne choisi dans le groupe constitué par les composés bis-N-acyl bislactames et des mélanges de ceux-ci, et d'un composé diamine ou triamine fonctionnel ou (ii) d'un allongeur de chaîne fonctionnel choisi dans le groupe constitué par les composés bis-N-acyl bislactames fonctionnalisés, et d'un composé diamine ou triamine fonctionnel, en phase liquide,
le réactant polyamide ayant une viscosité relative (VR) de départ, une concentration de groupes terminaux aminés (AEG(R)) et une concentration de groupes terminaux carboxylés (CEG(R)), le composé diamine ou triamine fonctionnel ayant une concentration de groupes terminaux aminés AEG(F), le composé allongeur de chaîne ayant une concentration de groupes terminaux lactames (LEG) d'au moins environ 10 équivalents par million de grammes du réactant polyamide de moins que la somme de AEG(R) et AEG(F), pendant une durée d'environ 0,5 minute à environ 10 minutes, ce qui augmente la VR du réactant polyamide.

2. Procédé selon la revendication 1, dans lequel le réactant polyamide est choisi dans le groupe constitué par un poly(hexaméthylène adipamide), un poly(ε-caproamide), un polydodécanolactame, un poly(tétraméthylène adipamide), un poly(hexaméthylène sébaçamide), un polyamide formé d'acide n-dodécanedioïque et d'hexaméthylènediamine, un polyamide de dodécaméthylènediamine et d'acide n-dodécanedioïque, des copolymères de ceux-ci et des mélanges de ceux-ci.

3. Procédé selon la revendication 1, dans lequel un composé allongeur de chaîne (i) est utilisé.

4. Procédé selon la revendication 1, dans lequel le composé allongeur de chaîne ou l'allongeur de chaîne fonctionnel est choisi dans le groupe constitué par les composés bis-N-acyl biscaprolactames et des mélanges de ceux-ci.

5. Procédé selon la revendication 1, dans lequel le composé allongeur de chaîne ou l'allongeur de chaîne fonctionnel est choisi dans le groupe constitué par l'isophtaloyl biscaprolactame, l'adipoyl biscaprolactame, le téréphtaloyl biscaprolactame, le (p-phénylène ditéréphtalate) N,N'biscaprolactame, et des mélanges de ceux-ci.

6. Procédé selon la revendication 1, dans lequel les composés diamines ou triamines sont choisis dans le groupe constitué par les agents de résistance aux taches, les agents ramifiants, les agents modifiant la disponibilité de sites de coloration, et des mélanges de ceux-ci.

7. Procédé selon la revendication 6, dans lequel:
les composés d'agent de résistance aux taches sont choisis dans le groupe constitué par les sels sodiques disulfoniques de o-tolidine, les composés d'agent ramifiant sont choisis dans le groupe constitué par la bis(hexaméthylène)triamine, et les composés d'agent modifiant la disponibilité de sites de coloration sont choisis dans le groupe constitué par la 1,4-bis(3-aminopropyl)pipérazine.

8. Procédé selon la revendication 1, dans lequel le polyamide modifié est façonné en un produit autre qu'une paillette.

9. Procédé selon la revendication 1, comprenant en outre le refroidissement brusque du polyamide modifié à température ambiante de sorte que le produit a une concentration de groupes terminaux aminés (AEG(P)) telle que définie par la formule:
AEG(P) = {AEG(R) + AEG(F) - LEG} ± X
dans laquelle:
AEG(P) est la concentration de groupes terminaux aminés dans le produit refroidi brusquement en unités d'équivalents/1000000 g du produit;
AEG(R) est la concentration de groupes terminaux aminés dans le réactant polyamide en unités d'équivalents/1000000 g du réactant polyamide;
AEG(F) est la concentration de groupes terminaux aminés dans le composé diamine ou triamine fonctionnel en unités d'équivalents/1000000 g du réactant polyamide;
LEG est la concentration de groupes terminaux lactames dans le composé allongeur de chaîne ou l'allongeur de chaîne fonctionnel en unités d'équivalents/1000000 g du réactant polyamide; et
X est tout nombre dans la gamme d'environ 0 à environ 15.

10. Procédé selon la revendication 9, dans lequel X est tout nombre dans la gamme d'environ 0 à environ 5.

11. Produit préparé par le procédé selon la revendication 1.

12. Filament, comprenant:
un polymère synthétique filé en fusion, incluant:
des motifs répétés polyamides ou des motifs diamines ou triamines fonctionnels (R₁);
des groupes allongeurs de chaîne polyamides (R₂), chacun indépendamment choisi dans le groupe constitué par les groupes bis-N-acyl bislactames facultativement fonctionnalisés;
dans lequel au moins l'un parmi une diamine fonctionnelle, une triamine fonctionnelle ou des groupes bis-N-acyl bislactames fonctionnels sont présents, et
des groupes terminaux (R₃), chacun indépendamment choisi dans le groupe constitué par un atome d'hydrogène et un groupe hydroxyle;
le polymère incluant des chaînes, chacune ayant indépendamment une structure chimique:
R₃-(R₁-R₂)_{y}-R₁-R₃ (2)
où y est un entier de 1 à 14; et
le filament a une viscosité relative dans de l'acide formique d'au moins environ 30.

13. Filament selon la revendication 12, dans lequel les éléments des motifs répétés polyamides (R₁) sont chacun indépendamment choisis dans le groupe constitué par (i) -{CO(CH₂)ₖ-CONH-(CH₂)ₘNH}ₙ- où k et m sont chacun indépendamment un entier de 1 à 12, et n est un entier de 10 à 140, et (ii) -{NH(CH:₂)ₓ-CO}_{z}- où x est un entier de 1 à 12 et z est un entier de 20 à 280.

14. Filament selon la revendication 12, dans lequel (R₁) inclut des motifs diamines fonctionnalisés ou triamines fonctionnalisés.

15. Filament selon la revendication 12, dans lequel les groupes allongeurs de chaîne facultativement fonctionnalisés sont chacun indépendamment choisis dans le groupe constitué par les groupes bis-N-acyl bislactames.

16. Filament selon la revendication 12, dans lequel les groupes allongeurs de chaîne sont chacun indépendamment choisis dans le groupe constitué par un groupe isophtaloyl biscaprolactame, un groupe adipoyl biscaprolactame, (p-phénylène ditéréphtalate) N,N' biscaprolactame et un groupe téréphtaloyl biscaprolactame.

17. Filament selon la revendication 12, dans lequel les composés amines fonctionnels sont utilisés et sont choisis dans le groupe constitué par les agents de résistance aux taches, les agents ramifiants, les agents modifiant la disponibilité de sites de coloration, et des mélanges de ceux-ci.

18. Filament selon la revendication 17, dans lequel les composés d'agent de résistance aux taches sont choisis dans le groupe constitué par les sels sodiques disulfoniques de o-tolidine, les composés d'agent ramifiant sont choisis dans le groupe constitué par la bis(hexaméthylène)triamine, et les composés d'agent modifiant la disponibilité de sites de coloration sont choisis dans le groupe constitué par la 1,4-bis(3-aminopropyl)pipérazine.
